# EUROPEAN PATENT APPLICATION

(11) **EP 4 768 155 A1**
(43) Date of publication of application: **01.07.2026**
(21) Application number: 24858069.8
(22) Date of filing: 08.07.2024
(51) Int. Cl.: B22D 47/00, B22D 17/00, B22D 17/20

(54) **DIE-CASTING PRODUCTION SYSTEM**

(30) Priority: 25.08.2023 CN 202311084994
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: REN, Min, Ningbo, Zhejiang 315899 (CN); WANG, Xuetai, Ningbo, Zhejiang 315899 (CN); HOU, Dongfeng, Ningbo, Zhejiang 315899 (CN); WANG, Jian, Ningbo, Zhejiang 315899 (CN); YANG, Qiming, Ningbo, Zhejiang 315899 (CN); JIANG, Ren, Ningbo, Zhejiang 315899 (CN); ZHOU, Xun, Ningbo, Zhejiang 315899 (CN)
(74) Representative: Boult Wade Tennant LLP
(86) International application number: PCT/CN2024/104303
(87) International publication number: WO 2025/044525

(57) **Abstract**

A die-casting production system, including a smelting apparatus (100), a melt-discharging apparatus (200), a production apparatus (300), a raw material region (400), a finished product region (500) and a transfer member (600). The raw material region (400) and the finished product region (500) are respectively located on different sides of the production apparatus (300); the production apparatus (300) includes a die casting member (310), a carrying member (320), and a post-processing assembly (330), the post-processing assembly (330) includes a waste-generating member (331) and a no-waste-generating member (332), the waste-generating member (331) is located on a side of the production apparatus (300) close to the raw material region (400), and the no-waste-generating member (332) is located on a side of the production apparatus (300) close to the finished product region (500); the carrying member (320) is configured to deliver a workpiece produced by the die casting member (310) to the post-processing assembly (330), and carry and transfer the workpiece in the post-processing assembly (330); the transfer members (600) are each provided between the raw material region (400) and the smelting apparatus (100), between the raw material region (400) and the waste-generating member (331), and between the post-processing assembly (330) and the finished product region (500).

## Description

The present application claims priority to Chinese Patent Application No. 202311084994.5 filed with China National Intellectual Property Administration on August 25, 2023, and entitled "Die-Casting Production System", which is hereby incorporated by reference in its entirety.

### TECHNICAL FIELD

The present application relates to the field of die-casting molding, and in particularly to a die-casting production system.

### BACKGROUND

Aluminum alloy parts are generally produced by the die-casting process. After aluminum liquid is injected into a die-casting machine, blank parts are obtained by die-casting molding. After the blank parts are processed by different processing apparatuses, qualified products may be obtained.

In existing large-scale die-casting part production systems, blank parts are often circulated between different processing apparatuses by means of manual operation in cooperation with forklifts, so that qualified products may be obtained through processing.

However, in existing die-casting production systems, blank parts require multiple manual transfers, resulting in a low degree of automation and low processing efficiency.

### SUMMARY

In view of the above problems, the present application provides a die-casting production system having the advantages of high automation degree and high processing efficiency, and being able to optimize a logistics transportation path.

In order to achieve the foregoing objects, the present application provides the following technical solutions.

The present application provides a die-casting production system, including a smelting apparatus, a melt-discharging apparatus, a production apparatus, a raw material region, a finished product region, and a transfer member; the melt-discharging apparatus is configured to deliver a molten metal produced by the smelting apparatus to the production apparatus; the raw material region and the finished product region are respectively located on different sides of the production apparatus;
the production apparatus includes a die casting member, a carrying member, and a post-processing assembly, the post-processing assembly includes a waste-generating member and a no-waste-generating member, the waste-generating member is located on a side of the production apparatus close to the raw material region, and the no-waste-generating member is located on a side of the production apparatus close to the finished product region; the carrying member is configured to deliver a workpiece produced by the die casting member to the post-processing assembly, and carry and transfer the workpiece in the post-processing assembly;
the transfer members are each provided between the raw material region and the smelting apparatus, between the raw material region and the waste-generating member, and between the post-processing assembly and the finished product region.

The die-casting production system provided in the present application, through the mutual cooperation of the smelting apparatus, the melt-discharging apparatus, the production apparatus, the raw material region, the finished product region and the transfer members, may realize full-process automated production, processing and storage of products, improving the degree of automation and processing efficiency. In addition, by arranging the positions of the waste-generating member and the no-waste-generating member, the waste-generating member is located on the side of the production apparatus close to the raw material region, and the no-waste-generating member is located on the side of the production apparatus close to the finished product region, so that the transportation path of processing waste and the transportation path of processed finished products are mutually independent without cross-influence, ensuring the efficient operation of the die-casting production system. Thereby, the die-casting production system provided in the present application has the advantages of high automation degree and high processing efficiency, reduces the number of operators and production costs, and can optimize the logistics transportation path.

In a possible implementation, the waste-generating member includes at least one of a slag-removing member, a plasma cutting member, and a deburring member; and/or the no-waste-generating member includes at least one of an integrity detection member, a water cooling member, and a laser coding member.

In this way, the waste-generating member and the no-waste-generating member cooperate with each other, and may process the die-cast blank parts to obtain finished products.

In a possible implementation, the production apparatus further includes an internal detection member, the internal detection member is located on the side of the production apparatus close to the raw material region and on a side of the post-processing assembly away from the die casting member; the carrying member is configured to deliver the workpiece processed by the post-processing assembly to the internal detection member; and the transfer member is provided between the internal detection member and the finished product region.

In this way, the finished products that is detected to be qualified by the internal detection member may be delivered to the finished product region through the transfer member; and the products that is detected to be non-qualified may be recycled and reused.

In a possible implementation, the die-casting production system further includes a crushing apparatus, the crushing apparatus is located between the internal detection member and the raw material region; the transfer members are each provided between the internal detection member and the crushing apparatus, and between the crushing apparatus and the raw material region.

In this way, the existence of the crushing apparatus facilitates the crushing of the finished products that is detected to be non-qualified, so as to realize the recycling and reuse of resources.

In a possible implementation, the smelting apparatus includes a smelting member and a heat preservation member that are arranged adjacently, the heat preservation member is configured to preserve heat of a molten metal produced by the smelting member; a loading part is provided beside a feeding port of the smelting member, and the loading part is configured for placement of the transfer member.

In this way, through the mutual cooperation of the transfer member, the smelting member and the heat preservation member, the molten metal required for die-casting may be obtained.

In a possible implementation, the smelting member is located on the side of the production apparatus close to the raw material region.

In this way, the smelting member and the waste-generating member are located on the same side, which can shorten the transportation path between the raw material region and the smelting member.

In a possible implementation, the carrying member is a sliding member, and along a direction perpendicular to a sliding direction of the carrying member, the waste-generating member and the no-waste-generating member are respectively distributed on both sides of the carrying member.

In this way, the carrying member may slide between the waste-generating member and the no-waste-generating member, facilitating the carrying of the workpieces between the waste-generating member and the no-waste-generating member.

In a possible implementation, the carrying member is a multi-axis robot, and the multi-axis robot is provided with a gripper.

In this way, the multi-axis robot has good flexibility, and facilitates to carry the workpieces after it has the griper.

In a possible implementation, the smelting apparatus and the production apparatus are integrally arranged and integrated into a die-casting island.

In this way, the existence of the die-casting island can improve the degree of integration and automation of the production system, facilitate operation and management, and occupy a small floor area.

In a possible implementation, the melt-discharging apparatus is integrated on the die-casting island and located between the smelting apparatus and the production apparatus;
the melt-discharging apparatus includes a mounting base, a crossbar, a moving member and a melt-placing member, the mounting base is mounted on the die-casting island, and the crossbar is rotatably connected to the mounting base and rotates along a horizontal plane; along an extending direction of the crossbar, the moving member is movably mounted on the crossbar; along a vertical direction, the melt-placing member is movably mounted on the moving member.

In this way, through the mutual cooperation of the crossbar, the moving member and the melt-placing member, the melt-placing member is able to deliver the molten metal produced by the smelting apparatus to the production apparatus.

The configuration of the present application, as well as other inventive objects and beneficial effects thereof, will be more clearly understood through the description of specific implementations in combination with the accompanying drawings.

### BRIEF DESCRIPTION OF DRAWINGS

To describe the technical solutions in embodiments of the present application or in the prior art more clearly, the following will briefly introduce the accompanying drawings required for describing the embodiments or the prior art. Apparently, the accompanying drawings in the following description are some embodiments of the present application, and persons of ordinary skill in the art may also obtain other drawings from these accompanying drawings without creative effort.
FIG. 1 is a structural diagram of a die-casting production system provided in an embodiment of the present application.
FIG. 2 is a processing flow diagram of a die-casting production system provided in an embodiment of the present application.
FIG. 3 is a structural diagram of a melt-discharging apparatus provided in an embodiment of the present application.

Explanation of reference signs:
100-smelting apparatus; 110-smelting member; 111-loading part; 120-heat preservation member; 200-melt-discharging apparatus; 210-mounting base; 220-crossbar; 230-moving member; 240-melt-placing member; 300-production apparatus; 310-die casting member; 320-carrying member; 330-post-processing assembly; 331-waste-generating member; 331A-slag-removing member; 331B-plasma cutting member; 331C-deburring member; 332-no-waste-generating member; 332A-integrity detection member; 332B-water cooling member; 332C-laser coding member; 340-internal detection member; 400-raw material region; 500-finished product region; 600-transfer member; 700-crushing apparatus; 800-die-casting island; 810-base; 910-sliding table; 920-sliding rail; 930-transportation path.

### DESCRIPTION OF EMBODIMENTS

Aluminum alloy has a series of excellent material properties, such as low tissue density, high specific strength, high specific stiffness, good elasticity, corrosion resistance, good wear resistance, as well as good processing and forming characteristics and recycling and regeneration characteristics. In the prior art, aluminum alloy parts are generally produced by the die-casting process; compared with other processing processes, the die-casting process has advantages such as high dimensional accuracy and smooth surface. In existing large-scale die-casting part production systems, blank parts are often circulated between different processing apparatuses by means of manual operation in cooperation with forklifts; and qualified products can only be obtained after the blank parts are processed by different processing apparatuses.

However, in existing die-casting production systems, since blank parts need to be processed by multiple processing apparatuses, the blank parts can only be processed into qualified products after undergoing multiple manual transfer between different processing apparatuses; therefore, the die-casting production systems in the prior art have low degree of automation and low processing efficiency, and require a large number of operators, which increases production costs.

Based on the foregoing problems, the present application provides a die-casting production system. Through the mutual cooperation of the smelting apparatus, the melt-discharging apparatus, the production apparatus, the raw material region, the finished product region and the transfer member, full-process automated production, processing and storage of products can be realized, thereby improving the degree of automation and processing efficiency; in addition, the post-processing assembly for processing workpieces includes a waste-generating member and a no-waste-generating member. By arranging the positions for the waste-generating member and the no-waste-generating member, the waste-generating member is located on the side of the production apparatus close to the raw material region, and the no-waste-generating member is located on the side of the production apparatus close to the finished product region, so that the transportation path for processing waste and the transportation path for finished products after offline are mutually independent, without cross influence between them.

To make the objectives, technical solutions and advantages of the embodiments of the present application clearer, the technical solutions in the embodiments of the present application will be described clearly and comprehensively below with reference to the accompany drawings of the embodiments of the present application. Apparently, the described embodiments are some rather than all of embodiments of the present application. Based on the embodiments of the present application, all other embodiments obtained by persons of ordinary skill in the art without creative effort shall fall within the protection scope of the present application.

The following takes specific embodiments to describe in detail the technical solutions of the present application and how the technical solutions of the present application solve the foregoing technical problems. The following specific embodiments may be combined with each other, and the same or similar concepts or processes may not be repeated in some embodiments.

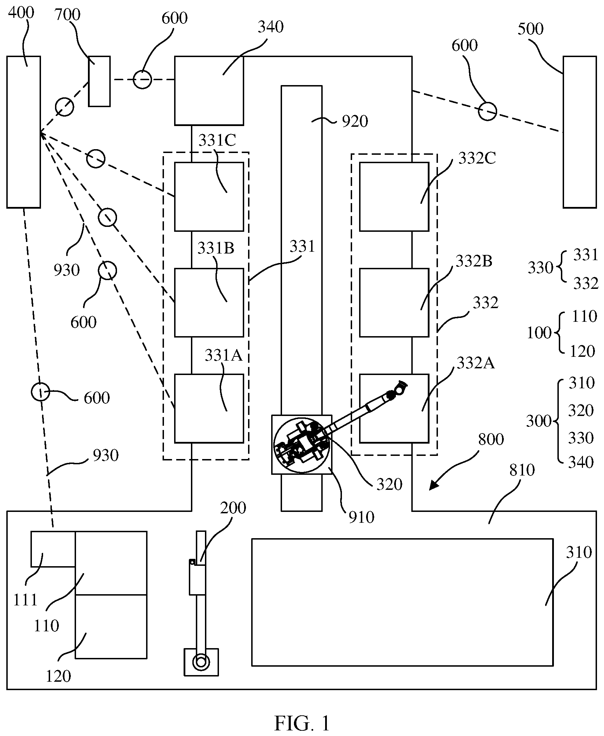

Hereinafter, with reference to FIGS. 1 to 3, the structures of the die-casting production system provided in the embodiments of the present application are described in detail.

As shown in FIG. 1, the present application provides a die-casting production system, which includes a smelting apparatus 100, a melt-discharging apparatus 200, a production apparatus 300, a raw material region 400, a finished product region 500, and transfer members 600; where, the raw material region 400 is configured to store metal raw material, the finished product region 500 is configured to store processed finished products, the smelting apparatus 100 is configured to process the metal raw material into a molten metal, the melt-discharging apparatus 200 is configured to deliver the molten metal produced by the smelting apparatus 100 to the production apparatus 300, and the production apparatus 300 is configured to produce finished products; in addition, the raw material region 400 and the finished product region 500 are respectively located on different sides of the production apparatus 300.

Specifically, the production apparatus 300 includes a die casting member 310, a carrying member 320, and a post-processing assembly 330; the melt-discharging apparatus 200 can deliver the molten metal produced by the smelting apparatus 100 to the die casting member 310 of the production apparatus 300, blank parts can be produced through die-casting by the die casting member 310, and the post-processing assembly 330 can further process the blank parts to obtain finished products. Further, the post-processing assembly 330 includes a waste-generating member 331 and a no-waste-generating member 332, where a difference between the waste-generating member 331 and the no-waste-generating member 332 lies in: the waste-generating member 331 generates waste during the processing of blank parts, while the no-waste-generating member 332 does not generate waste during the processing of blank parts. In addition, the waste-generating member 331 is located on the side of the production apparatus 300 close to the raw material region 400, and the no-waste-generating member 332 is located on the side of the production apparatus 300 close to the finished product region 500. The carrying member 320 is configured to deliver a workpiece produced by the die casting member 310 to the post-processing assembly 330, and carry and transfer the workpiece in the post-processing assembly 330. Thereby, the blank parts produced by the die casting member 310 can undergo different processing processes in the post-processing assembly 330. Specifically, the die casting member 310 may be a die-casting machine.

In addition, transfer members 600 are each provided between the raw material region 400 and the smelting apparatus 100, between the raw material region 400 and the waste-generating member 331, and between the post-processing assembly 330 and the finished product region 500. Thereby, the transfer members 600 can deliver the raw material in the raw material region 400 to the smelting apparatus 100, deliver the waste generated by the waste-generating member 331 to the raw material region 400, and deliver the finished product processed by the post-processing assembly 330 to the finished product region 500; each transfer member 600 has its own transportation path 930, and various transportation paths 930 do not interfere with each other. Specifically, the transfer member 600 may be an intelligent AGV (Automated Guided Vehicle), which facilitates the realization of automated transportation and can improve the transfer efficiency of transfer member 600. Through the mutual cooperation of the transfer member 600 and the melt-discharging apparatus 200, materials can be automatically transported between the smelting apparatus 100, the production apparatus 300, the raw material region 400, and the finished product region 500, thereby realizing automated production, processing, and storage throughout the whole process.

In summary, the die-casting production system provided in the present application can realize full-process automated production, processing, and storage of products through the mutual cooperation of the smelting apparatus 100, the melt-discharging apparatus 200, the production apparatus 300, the raw material region 400, the finished product region 500, and the transfer members 600, improving the degree of automation and processing efficiency. In addition, by arranging the positions for the waste-generating member 331 and the no-waste-generating member 332, the waste-generating member 331 is located on the side of the production apparatus 300 close to the raw material region 400, and the no-waste-generating member 332 is located on the side of the production apparatus 300 close to the finished product region 500, so that the transportation path for processing waste and the transportation path for processed finished product are mutually independent, with no cross influence between them, ensuring the efficient operation of the die-casting production system. Thereby, the die-casting production system provided in the present application has the advantages of high automation degree and high processing efficiency, reduces the number of operators and production costs, and can optimize the logistics transportation path.

In addition, in the die-casting production system provided in the present application, after the waste generated during the production and processing process is placed in the raw material region 400, it can be delivered to the smelting apparatus 100 by the transfer member 600, realizing the recycling and reuse of waste, and improving the utilization rate of resources. In addition, transferring the workpiece by means of manual operation in cooperation with forklifts has low safety factor; and the die-casting production system provided in the present application can improve the safety factor during the production process through automated production.

It should be noted that the finished product produced by the die-casting production system may be one of metal alloy parts such as cast iron parts, copper alloy parts, aluminum alloy parts, and zinc alloy parts.

In the embodiments of the present application, the waste-generating member 331 includes at least one of a slag-removing member 331A, a plasma cutting member 331B, and a deburring member 331C; and/or the no-waste-generating member 332 includes at least one of an integrity detection member 332A, a water cooling member 332B, and a laser coding member 332C. The slag-removing member 331A can process the slag pockets on the blank part, the plasma cutting member 331B can cut the blank part, the deburring member 331C may remove burrs on the blank part, the integrity detection member 332A can detect the external integrity of the blank part, the water cooling member 332B can perform water cooling treatment on the blank part, and the laser coding member 332C can perform coding on the blank part. When the slag-removing member 331A, the plasma cutting member 331B, and the deburring member 331C process the blank part, they all generate waste; when the integrity detection member 332A, the water cooling member 332B, and the laser coding member 332C process the blank part, they do not generate waste. With such a configuration, the waste-generating member 331 and the no-waste-generating member 332 cooperate with each other for processing the die-cast blank part, obtaining finished product.

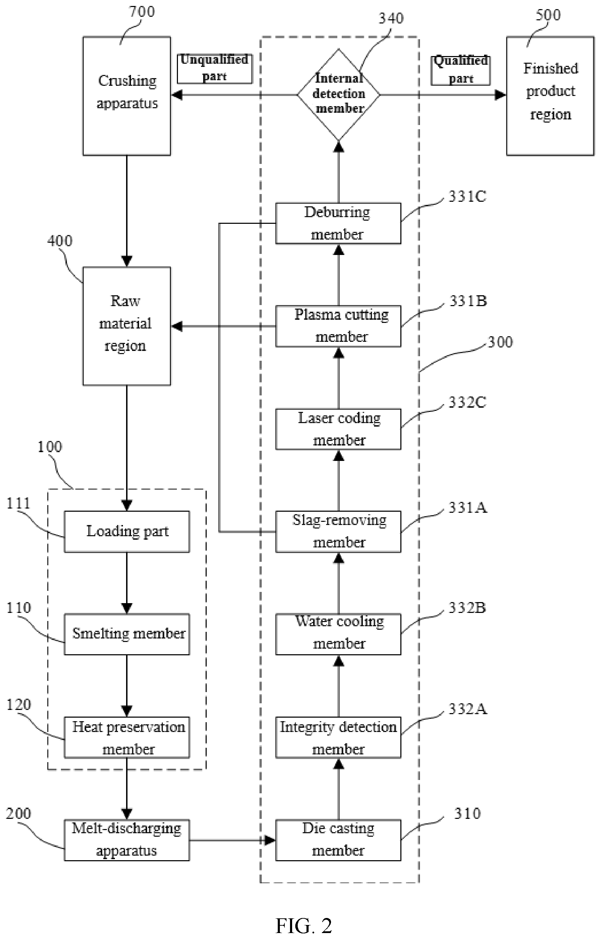

Exemplarily, as shown in FIG. 1, the waste-generating member 331 includes a slag-removing member 331A, a plasma cutting member 331B, and a deburring member 331C; and the no-waste-generating member 332 includes an integrity detection member 332A, a water cooling member 332B, and a laser coding member 332C. The slag-removing member 331A, the plasma cutting member 331B, and the deburring member 331C are located on the side of the production apparatus 300 close to the raw material region 400 and arranged in sequence; and the integrity detection member 332A, the water cooling member 332B, and the laser coding member 332C are located on the side of the production apparatus 300 close to the finished product region 500 and arranged in sequence. As shown in FIG. 2, the blank part obtained by die-casting of the die casting member 310 is processed sequentially through the integrity detection member 332A, the water cooling member 332B, the slag-removing member 331A, the laser coding member 332C, the plasma cutting member 331B, and the deburring member 331C to obtain a finished product, which can be transported to the finished product region 500 by the transfer member 600. By arranging the positions for the waste-generating member 331 and the no-waste-generating member 332, the effect of safe zoning is achieved. In addition, a processing program may be called according to the processing process of different types of products to activate part or all of the waste-generating members 331 and the no-waste-generating members 332.

In the embodiments of the present application, as shown in FIGS. 1 and 2, the production apparatus 300 further includes an internal detection member 340, which may be configured to detect internal defects of finished product. Specifically, the internal detection member 340 may be an X-ray detection member. In addition, the internal detection member 340 is located on the side of the production apparatus 300 close to the raw material region 400 and on a side of the post-processing assembly 330 away from the die casting member 310. The carrying member 320 is configured to deliver the workpiece processed by the post-processing assembly 330 to the internal detection member 340; and the transfer member 600 is provided between the internal detection member 340 and the finished product region 500. With such a configuration, the finished product that is detected to be qualified by the detection of the internal detection member 340 can be delivered to the finished product region 500 by the transfer member 600; and the product that that is detected to be non-qualified can be recycled and reused.

Further, as shown in FIGS. 1 and 2, the die-casting production system further includes a crushing apparatus 700, which is located between the internal detection member 340 and the raw material region 400; the transfer members 600 are each provided between the internal detection member 340 and the crushing apparatus 700, and between the crushing apparatus 700 and the raw material region 400. A finished product that is detected to be non-qualified by the internal detection member 340 can be delivered to the crushing apparatus 700 by the transfer member 600; the crushing apparatus 700 can be configured to crush the finished product; and the crushed materials can be delivered to the raw material region 400 by the transfer member 600. With such a configuration, the existence of the crushing apparatus 700 facilitates the crushing of the finished product that is detected to be non-qualified, so as to realize the recycling and reuse of resources.

In the embodiments of the present application, as shown in FIG. 1, the smelting apparatus 100 includes a smelting member 110 and a heat preservation member 120 arranged adjacently. The heat preservation member 120 is configured to preserve the heat of the molten metal produced by the smelting member 110; a loading part 111 is provided beside a feeding port of the smelting member 110, and is configured to place the transfer member 600. Thereby, the transfer member 600 can deliver metal raw material stored in the raw material region 400 to the loading part 111, and perform loading at the loading part 111, putting the metal raw material into the feeding port of the smelting member 110. With such a configuration, through the mutual cooperation of the transfer member 600, the smelting member 110, and the heat preservation member 120, the molten metal required for die-casting can be obtained. Specifically, the metal raw material is transported by the transfer member 600 to the loading part 111, a lifting mechanism can lift the metal raw material to be above the feeding port, and then put the metal raw material into the smelting member 110. After the loading is completed, the transfer member 600 returns to the raw material region 400 to perform loading again. Specifically, the smelting member 110 may be a smelting furnace, and the heat preservation member 120 may be a heat preservation furnace.

In the embodiments of the present application, as shown in FIG. 1, the smelting member 110 is located on the side of the production apparatus 300 close to the raw material region 400. With such a configuration, the smelting member 110 and the waste-generating member 331 are located on the same side, which can shorten the transportation path between the raw material region 400 and the smelting member 110.

In the embodiments of the present application, as shown in FIG. 1, the carrying member 320 is a sliding member; and along a direction perpendicular to a sliding direction of the carrying member 320, the waste-generating member 331 and the no-waste-generating member 332 are distributed on both sides of the carrying member 320 respectively. With such a configuration, the carrying member 320 can slide between the waste-generating member 331 and the no-waste-generating member 332, facilitating the transportation of workpieces between the waste-generating member 331 and the no-waste-generating member 332.

Specifically, the carrying member 320 is a multi-axis robot, which is provided with a gripper. With such a configuration, the multi-axis robot has good flexibility, and facilitates the transportation of workpieces after it has the gripper. Further, the multi-axis robot may be fixedly mounted on a sliding table 910, and the sliding table 910 may be slidably arranged on a sliding rail 920, so that the multi-axis robot may slide on the sliding rail 920. Specifically, the multi-axis robot may be a seven-axis robot.

In the embodiments of the present application, as shown in FIG. 1, the smelting apparatus 100 and the production apparatus 300 are integrally arranged and integrated into a die-casting island 800. With such a configuration, the existence of the die-casting island 800 can improve the integration degree and automation degree of the production system, facilitate operation and management, and occupy a small floor area. In addition, the entire die-casting island 800 can realize fully automated operation, with the loading, unloading and outputting of product being performed by the transfer members 600. The smelting of the metal raw material and the processing of the blank part obtained after die-casting are both automatically completed in the die-casting island 800, thereby reducing the transfer frequency of loading and unloading, reducing the product states that require inventory storage, reducing the personnel required for inventory management, and improving the intelligence degree and operation efficiency of the production system. In addition, the waste generated in the die-casting island 800 may also be automatically recycled. Specifically, the die-casting island 800 is provided with a base 810, and the smelting apparatus 100 and the production apparatus 300 are both arranged on the base 810. In addition, the sliding rail 920 is also arranged on the base 810, and the multi-axis robot slides on the sliding rail 920.

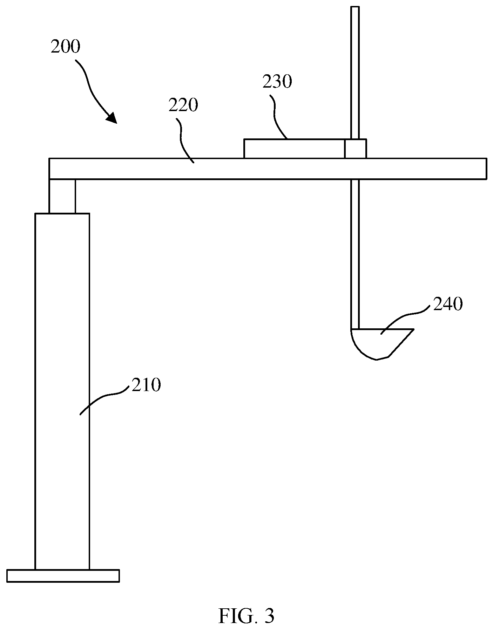

Further, as shown in FIG. 3, the melt-discharging apparatus 200 is integrated on the die-casting island 800 and located between the smelting apparatus 100 and the production apparatus 300; the melt-discharging apparatus 200 includes a mounting base 210, a crossbar 220, a moving member 230 and a melt-placing member 240. The mounting base 210 is mounted on the die-casting island 800, the crossbar 220 is rotatably connected to the mounting base 210, and the crossbar 220 rotates along a horizontal plane; along an extending direction of the crossbar 220, the moving member 230 is movably mounted on the crossbar 220; along a vertical direction, the melt-placing member 240 is movably mounted on the moving member 230. With such a configuration, through the mutual cooperation of the crossbar 220, the moving member 230 and the melt-placing member 240, the melt-placing member 240 can deliver the molten metal produced by the smelting apparatus 100 to the production apparatus 300. Specifically, the mounting base 210 may be mounted on the base 810 of the die-casting island 800, the moving member 230 may be a lead-screw slider assembly, the melt-placing member 240 is located on the slider of the lead-screw slider assembly, and the melt-placing member 240 may be a hopper.

In the description of the present application, it should be noted that unless otherwise clearly specified and defined, the terms "mount", "couple", "connect" shall be understood in a broad sense, for example, it may be a fixed connection, or an indirect connection through an intermediate medium, or internal communication between two components or an interaction relationship between two components. For persons of ordinary skill in the art, the specific meanings of the above terms in the present application can be understood according to specific situations.

In the present application, the device or component, whether explicitly stated or implied, must have a specific orientation, be constructed and operated in a specific orientation, and therefore cannot be understood as a limitation to the present application. In the description of the present application, the expression "multiple" means two or more, unless otherwise precisely and specifically defined.

The terms such as "first", "second", "third", and "fourth" (if present) in the specification, claims and the above drawings of the present application are used to distinguish similar objects, and are not necessarily used to describe a specific order or sequence. It should be understood that the data used in this way can be interchanged under appropriate circumstances, so that the embodiments of the present application described herein can be implemented in an order other than those illustrated or described herein, for example. In addition, the terms "include" and "have" and any variations thereof are intended to cover non-exclusive inclusion, for example, a process, method, system, product or equipment including a series of steps or units is not necessarily limited to the clearly listed steps or units, but may include other steps or units that are not clearly listed or are inherent to such processes, methods, products or equipment.

Finally, it should be noted that the above embodiments are only used to illustrate the technical solutions of the present application, not to limit them; although the present application has been described in detail with reference to the foregoing embodiments, those of ordinary skill in the art should understand that they can still modify the technical solutions recorded in the foregoing embodiments, or make equivalent replacements to some or all of the technical features; and these modifications or replacements do not make the essence of the corresponding technical solutions deviate from the scope of the technical solutions of the embodiments of the present application.

## Claims

1. A die-casting production system, comprising a smelting apparatus, a melt-discharging apparatus, a production apparatus, a raw material region, a finished product region, and a transfer member; wherein the melt-discharging apparatus is configured to deliver a molten metal produced by the smelting apparatus to the production apparatus; the raw material region and the finished product region are respectively located on different sides of the production apparatus;
the production apparatus comprises a die casting member, a carrying member, and a post-processing assembly, the post-processing assembly comprises a waste-generating member and a no-waste-generating member, the waste-generating member is located on a side of the production apparatus close to the raw material region, and the no-waste-generating member is located on a side of the production apparatus close to the finished product region; the carrying member is configured to deliver a workpiece produced by the die casting member to the post-processing assembly, and carry and transfer the workpiece in the post-processing assembly; and
the transfer members are each provided between the raw material region and the smelting apparatus, between the raw material region and the waste-generating member, and between the post-processing assembly and the finished product region.

2. The die-casting production system according to claim 1, wherein the waste-generating member comprises at least one of a slag-removing member, a plasma cutting member, and a deburring member; and/or the no-waste-generating member comprises at least one of an integrity detection member, a water cooling member, and a laser coding member.

3. The die-casting production system according to claim 1, wherein the production apparatus further comprises an internal detection member; the internal detection member is located on the side of the production apparatus close to the raw material region and on a side of the post-processing assembly away from the die casting member; the carrying member is configured to deliver the workpiece processed by the post-processing assembly to the internal detection member; and the transfer member is provided between the internal detection member and the finished product region.

4. The die-casting production system according to claim 3, further comprising a crushing apparatus, wherein the crushing apparatus is located between the internal detection member and the raw material region; the transfer members are each provided between the internal detection member and the crushing apparatus, and between the crushing apparatus and the raw material region.

5. The die-casting production system according to any one of claims 1-4, wherein the smelting apparatus comprises a smelting member and a heat preservation member arranged adjacently, the heat preservation member is configured to preserve heat of a molten metal produced by the smelting member; a loading part is provided beside a feeding port of the smelting member, and the loading part is configured for placement of the transfer member.

6. The die-casting production system according to claim 5, wherein the smelting member is located on the side of the production apparatus close to the raw material region.

7. The die-casting production system according to any one of claims 1-4, wherein the carrying member is a sliding member; and along a direction perpendicular to a sliding direction of the carrying member, the waste-generating member and the no-waste-generating member are respectively distributed on both sides of the carrying member.

8. The die-casting production system according to claim 7, wherein the carrying member is a multi-axis robot, and the multi-axis robot is provided with a gripper.

9. The die-casting production system according to any one of claims 1-4, wherein the smelting apparatus and the production apparatus are integrally arranged and integrated into a die-casting island.

10. The die-casting production system according to claim 9, wherein the melt-discharging apparatus is integrated on the die-casting island and located between the smelting apparatus and the production apparatus;
the melt-discharging apparatus comprises a mounting base, a crossbar, a moving member, and a melt-placing member, the mounting base is mounted on the die-casting island, the crossbar is rotatably connected to the mounting base, and the crossbar rotates along a horizontal plane; along an extending direction of the crossbar, the moving member is movably mounted on the crossbar; along a vertical direction, the melt-placing member is movably mounted on the moving member.
